(19) Europäisches Patentamt
European Patent Office
Office européen des brevets

(11) Veröffentlichungsnummer : **0 212 707 B1**

# (12) EUROPÄISCHE PATENTSCHRIFT

(45) Veröffentlichungstag der Patentschrift : **06.02.91 Patentblatt 91/06**

(51) Int. Cl.$^5$ : **C07F 5/02**

(21) Anmeldenummer : **86201256.4**

(22) Anmeldetag : **18.07.86**

## (54) Verfahren zur Herstellung von Catecholboran.

(30) Priorität : **07.08.85 DE 3528321**

(43) Veröffentlichungstag der Anmeldung : **04.03.87 Patentblatt 87/10**

(45) Bekanntmachung des Hinweises auf die Patenterteilung : **06.02.91 Patentblatt 91/06**

(84) Benannte Vertragsstaaten : **AT BE CH DE FR GB IT LI NL SE**

(56) Entgegenhaltungen :
**DE-B- 1 255 095**
**JOURNAL OF THE CHEMICAL SOCIETY, DALTON TRANSACTIONS, Nr. 8, August 1985, Royal Society of Chemistry, London, GB; D. MÄNNIG et al.: "Contributions to the chemistry of boron. part 160. A convenient synthesis of catecholatoborane and diborane"**

(56) Entgegenhaltungen :
**J. AM. CHEM. SOC., Band 97, 18. September 1985, Washington, DC, US; H.C. BROWN et al.: "Hydroboration. XXXIX. 1,3,2-benzodioxaborole (catecholborane) as a new hydroboration reagent for alkenes and alkynes. A general synthesis of alkane- and alkeneboronic acids and esters via hydroboration. Directive effects in the hydroboration of alkenes and alkynes with catecholborane"**

(73) Patentinhaber : **METALLGESELLSCHAFT AG**
**Reuterweg 14 Postfach 3724**
**D-6000 Frankfurt/M.1 (DE)**

(72) Erfinder : **Nöth, Heinrich, Prof. Dr.**
**Eichleite 25 a**
**D-8022 Grünwald (DE)**
Erfinder : **Männig, Detlev**
**Boschetsriederstrasse 15**
**D-8000 München 70 (DE)**

(74) Vertreter : **Rieger, Harald, Dr.**
**Reuterweg 14**
**D-6000 Frankfurt am Main (DE)**

**EP 0 212 707 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung von Catecholboran durch Umsetzen einer phenolischen Verbindung mit einem Borhydrid in einem organischen Lösungsmittel.

In der DE-B-1 255 095 wird ein Verfahren zur Herstellung von Dimethoxyboran durch Umsetzung von Trimethylborat mit Natriumborhydrid in einem aliphatischen Äther beschrieben. Dabei wird das Dimethoxyboran in einer Ausbeute von etwa 55% gebildet. Bei diesem Verfahren ist nachteilig, daß das Dimethoxyboran nur in einer relativ niedrigen Ausbeute gewonnen werden kann.

Es ist ferner bekannt, Catecholboran (1,3,2-Benzodioxaborolan) als monofunktionelles Hydroborierungsmittel für Alkene und Alkine zu verwenden. Catecholboran wird dabei in bekannter Weise durch Reaktion von Brenskatechin (1,2 Dihydroxybenzol) mit Boran in Tetrahydrofuran unterhalb Raumtemperatur hergestellt gemäß der allgemeinen Reaktionsgleichung (1) :

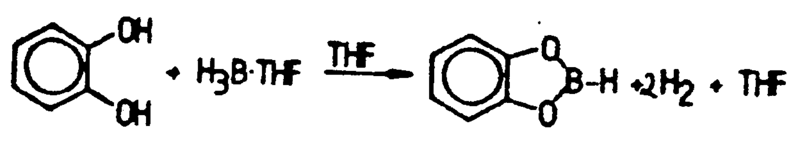


(Journal of the American Chemical Society, Vol. 97, 1975, S. 5249-55)

Bei diesem Verfahren ist es jedoch von Nachteil, daß gemäß Gleichung (1) zwei Mol Wasserstoff gebildet werden.

Des weiteren bereitet insbesondere die Isolierung des Catecholborans in hoher Ausbeute aus der Lösung erhebliche Schwierigkeiten.

Der Erfindung liegt die Aufgabe zugrunde, ein Verfahren zur Herstellung von Catecholboran bereitzustellen, das – je nach Reaktionsmedium – die Herstellung in Lösung mit hoher Ausbeute oder die Isolierung des Catecholborans aus Lösungen in hoher Ausbeute ermöglicht.

Ausgehend von einem Verfahren der eingangs genannten Art zur Herstellung von Catecholboran durch Umsetzen einer phenolischen Verbindung mit einem Borhydrid in einem Lösungsmittel besteht das Verfahren der Erfindung darin, daß Tris(brenzcatechinato)bisboran (Borsäureester des Brenzcatechins) mit Alkaliborhydrid in einem aliphatischen Äther gemäß G1. (2) umgesetzt wird.

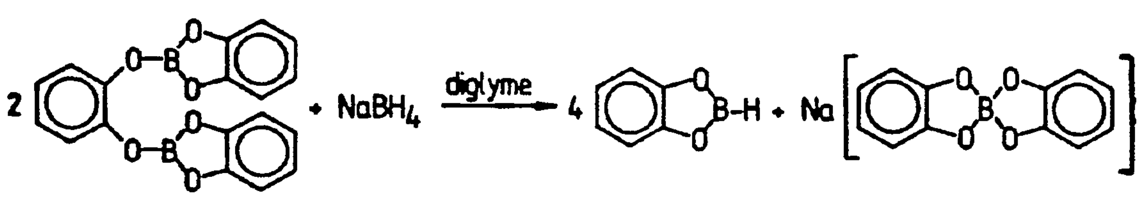


Mit der Erfindung werden der Ablauf der Reaktion bei Raumtemperatur bewirkt und einfach zu handhabende Reaktanten bereitgestellt. In einer Nebenreaktion entstehen kleine Mengen Diboran.

In dem erfindungsgemäßen Verfahren werden die Reaktanten im Lösungsmittel in stöchiometrischem Verhältnis eingesetzt. Eine hohe Ausbeute an Catecholboran wird bei der Einhaltung eines Verhältnisses Alkaliborhydrid zu Borsäureester von 1 : 2 erzielt. Erhöht man dieses Verhältnis auf 3 : 2, so erhält man in hoher Ausbeute Diboran.

Als Alkaliborhydrid wird Lithium-, Natrium- oder Kaliumborhydrid, vorzugsweise Natriumborhydrid, eingesetzt. Die Wahl des aliphatischen Äthers richtet sich nach den Bedürfnissen der Weiterverwendung des Catecholborans, das heißt, ob dieses in Lösung oder in isolierter Form für Hydroborierungen in bekannter Weise eingesetzt wird.

Als aliphatische Äther eignen sich Dialkyläther mit niederen Alkylgruppen, wie Diäthyl-, Diisopropyl- oder Dibutyläther. Ferner die Dimethyl- oder Diäthyläther von Äthylenglykol, Diäthylenglykol oder Triäthylenglykol. Auch cyclische Äther, wie Tetrahydrofuran oder aromatische Äther, wie Anisol, können als Lösungsmittel verwendet werden. Die Äther können einzeln oder als Mischungen eingesetzt werden. Beispielsweise ist die Verwendung von Diäthylenglykol-dimethyläther als Reaktionsmedium zweckmäßig, wenn das Catecholboran im Reaktionsmedium der weiteren Verwendung zugeführt werden soll. Besonders vorteilhaft ist jedoch die Umsetzung der Reaktanten in einem einfachen Äther mit niederen Alkylgruppen, wie Diäthyl-, Diisopropyl- oder Dibutyläther. Eine besonders günstige Reaktionsweise wird bei Verwendung von Diäthyläther erzielt. Da Natriumtetrahydridoborat ($NaBH_4$) und Kaliumtetrahydridoborat ($KBH_4$) nur eine

äußerst geringe Löslichkeit in Diäthyläther besitzen, ist es zweckmässig, einen Löslichkeitsvermittler einzusetzen. Hierzu eignen sich Lithiumhalogenide, insbesondere Lithiumchlorid. Hierbei wird durch intermediäre Umsetzung Lithiumborhydrid gebildet, das im Diäthyläther gut löslich ist. Das Lithiumchlorid wird im allgemeinen in einer Menge von 5 mol-% dem Reaktionsgemisch aus Natrium- bzw. Kaliumborhydrid und Tris(brenzcatechinato)bisboran zugesetzt. Es können auch geringere und bis zu stöchiometrischen Mengen eingesetzt werden. Die Reaktion verläuft unter kräftiger Agitation bei Raumtemperatur.

Zweckmäßig setzt man durch Mahlung aktiviertes Natrium- oder Kaliumborhydrid für die Umsetzung in einfachen Dialkyläthern ein. Nach einer besonders vorteilhaften Ausführungsform der Erfindung wird die aktivierende Mahlung während der Reaktion vorgenommen. Geeignete Aggregate für diese Arbeitsweise sind beispielsweise Attritormühlen oder Stabmühlen. Bei dieser Ausführungsform des erfindungsgemäßen Verfahrens werden Ausbeuten zwischen 75 und 95% erreicht und das Reaktionsprodukt Catecholboran läßt sich in einfacher Weise durch Abdestillieren des Diäthyläthers gewinnen. Das Catecholboran wird zur Isolierung einer fraktionierten Destillation unterzogen und bei etwa 75°/100 Torr in reiner Form und in einer Ausbeute von etwa 75 bis 80% gewonnen.

Die Vorteile des erfindungsgemäßen Verfahrens liegen insbesondere in der Bereitstellung einer Methode zur einfachen Herstellung von Catecholboran und seiner Isolierung. Catecholboran dient als spezifisches Hydroborierungsreagenz wie auch als Mittel zur Herstellung von Diboran.

Die Erfindung wird anhand der Beispiele näher und beispielhaft erläutert.

## Beispiel 1

a) Herstellung von Tris(brenzcatechinato)bisboran (Borsäureester des Brenzcatechins)

In einer Dean-Stark-Apparatur werden 189 g Brenzcatechin (1,71 mol) und 39,5 g $B_2O_3$ (0,57 mol) in 200 ml Benzol oder Toluol unter Rückflußbedingungen erhitzt, bis die erforderliche Menge Wasser (31 ml) abgetrieben ist. Dies ist etwa nach 20 Stunden der Fall. Der überwiegende Teil des Lösungsmittels wird durch Destillation und der Rest durch Vakuumdestillation abgetrennt. Bei 150°C sublimiert im Vakuum eine Spur Feststoff innerhalb von 2 Stunden. Der Rückstand wird sodann destilliert, wobei eine geringe Menge (ca. 10 ml) Vorlauf verworfen wird.

Ausbeute : 185 g (93%), Siedepunkt 176 bis 177°C bei $7.10^{-2}$ Torr

Eine andere Herstellungsweise des Borsäureesters ist die Umsetzung von Boroxid ($B_2O_3$) mit Brenzcatechin in der Schmelze.

Für die Weiterverarbeitung ist eine Isolierung des Borsäureesters durch Destillation nicht erforderlich.

b) Weiterverarbeitung zum Catecholboran

Zu einer Lösung von 23,64 g Tris(brenzcatechinato)bisboran (68,3 mmol) in 20 ml Äthylenglykoldimethyläther (Diglyme) wird eine Lösung von 1,29 g $NaBH_4$ (34,1 mmol) in Diglyme bei Raumtemperatur zugegeben. Die Reaktionsmischung wird gerührt und steht unter einer Stickstoffatmosphäre durch langsames Überleiten eines Stickstoffstromes. Mit dem Stickstoffstrom wird entwickeltes Diboran ($B_2H_6$) ausgetragen und in Aceton absorbiert. Nach 12 bis 15 Stunden Rühren unter Stickstoffatmosphäre werden bei einer Temperatur von 80 bis 100°C und bei einem Druck von 100 Torr 37 ml einer 3,6-molaren Lösung von Catecholboran in Diglyme (Ausbeute 97%) abdestilliert. Der nichtflüchtige Rückstand wird bei einer Temperatur von 100°C und einem Druck von $10^{-2}$ Torr getrocknet. Durch Vergleich seines $^{11}B$-NMR-Spektrums ($\delta^{11}B$ 14,6 ppm in Diglyme) mit dem $^{11}B$-NMR-Spektrum einer authentischen Substanz, hergestellt aus Brenzcatechin und Natriumborhydrid, wird der Rückstand als Natrium-bis(catechol)borat $NaB(O_2C_6H_4)_2$ identifiziert.

## Beispiel 2

In eine Kugelmühle mit Stahlkugeln werden 185 g Tris(brenzcatechinato)bisboran (0,53 mol) und 10,1 Natriumborhydrid (0,27 mol) eingegeben. Nach Zugabe von 400 ml Diäthyläther werden noch 570 mg Lithiumchlorid zugesetzt und die Reaktionsmischung während 55 Stunden unter Mahlung zur Reaktion gebracht. Hierauf werden die verflüchtigungsfähigen Anteile bei Unterdruck unter Verwendung eines Wasserbades entfernt. Die fraktionierte Destillation des Kondensates bei 75 bis 76°C and 100 Torr ergibt eine Ausbeute von 99 g (78%) Catecholboran.

## Ansprüche

1. Verfahren zur Herstellung von Catecholboran durch Umsetzen einer phenolischen Verbindung mit einem Borhydrid in einem Lösungsmittel, dadurch gekennzeichnet, daß Tris(brenzcatechinato)bisboran mit Alkaliborhydrid in einem aliphatischen Äther umgesetzt wird.

2. Verfahren nach Anspruch 1, dadurch gekennzeichnet, daß die Reaktanten in stöchiometrischem Verhältnis (Alkaliborhydrid : Borsäureester = 1 : 2) eingesetzt werden.

3. Verfahren nach den Ansprüchen 1 bis 2, dadurch gekennzeichnet, daß Lithium-, Natrium- oder Kaliumborhydrid verwendet wird.

4. Verfahren nach den Ansprüchen 1 bis 3, dadurch gekennzeichnet, daß aliphatische Äther aus der Gruppe Diäthyläther, Diisopropyläther, Dibutyläther, Dimethyl- oder Diäthyläther von Äthylenglykol, Diäthylenglykol oder Triäthylenglykol einzeln oder in Mischung verwendet werden.

5. Verfahren nach den Ansprüchen 1 bis 4, dadurch gekennzeichnet, daß bei Verwendung von Natrium- oder Kaliumborhydrid in einfachen Dialkyläthern ein Lithiumhalogenid als Lösungsvermittler verwendet wird.

6. Verfahren nach den Ansprüchen 1 bis 5 dadurch gekennzeichnet, daß bei Verwendung von einfachen Dialkyläthern ein durch Mahlung aktiviertes Natrium- oder Kaliumborhydrid eingesetzt wird.

7. Verfahren nach den Ansprüchen 1 bis 5, dadurch gekennzeichnet, daß bei Verwendung von Natrium- oder Kaliumborhydrid in einfachen Dialkyläthern die Reaktion unter aktivierender Mahlung ausgeführt wird.

## Claims

1. Process for the production of catecholborane by reacting a phenolic compound with a borohydride in a solvent, characterised in that tris(catecholate)bisborane is reacted with alkali borohydride in an aliphatic ether.

2. Process according to Claim 1, characterised in that the reactants are used in a stoichiometric ratio (alkali borohydride : boric acid ester = 1 : 2).

3. Process according to Claims 1 to 2, characterised in that lithium borohydride, sodium borohydride or potassium borohydride is used.

4. Process according to Claims 1 to 3, characterised in that aliphatic ethers from the group diethyl ether, diisopropyl ether, dibutyl ethers, dimethyl or diethyl ethers of ethylene glycol, diethylene glycol or triethylene glycol are used singly or in a mixture.

5. Process according to Claims 1 to 4, characterised in that when using sodium or potassium borohydride in simple dialkyl ethers a lithium halide is used as a solubiliser.

6. Process according to Claims 1 to 5, characterised in that when using simple dialkyl ethers a sodium or potassium borohydride which has been activated by grinding is used.

7. Process according to Claims 1 to 5, characterised in that when using sodium or potassium borohydride in simple dialkyl ethers the reaction is carried out with activating grinding.

## Revendications

1. Procédé de préparation de pyrocatéchineborane par réaction d'un composé phénolique sur un borohydrure, dans un solvant, caractérisé en ce qu'il consiste à faire réagir du tris(pyrocatéchinato)bisborane sur un borohydrure de métal alcalin dans un étheroxyde aliphatique.

2. Procédé suivant la revendication 1, caractérisé en ce qu'il consiste à utiliser les réactifs en un rapport stoechiométrique (borohydrure de métal alcalin : borate = 1 : 2).

3. Procédé suivant la revendication 1 ou 2, caractérisé en ce qu'il consiste à utiliser du borohydrure de lithium, du borohydrure de sodium ou du borohydrure de potassium.

4. Procédé suivant l'une des revendications 1 à 3, caractérisé en ce qu'il consiste à utiliser un étheroxyde aliphatique choisi parmi l'étheroxyde de diéthyle, l'étheroxyde de diisopropyle, l'étheroxyde de dibutyle, l'étheroxyde de diméthyle ou de diéthyle de l'éthylèneglycol, du diéthylèneglycol ou du triéthylèneglycol, seuls ou en mélange.

5. Procédé suivant l'une des revendications 1 à 4, caractérisé ce qu'il consiste, quand on utilise du borohydrure de sodium ou du borohydrure de potassium, dans des étheroxydes de dialcoyle simples, à utiliser un halogénure de lithium comme agent de solubilisation.

6. Procédé suivant l'une des revendications 1 à 5, caractérisé en ce qu'il consiste, quand on utilise des

étheroxydes de dialcoyle simples, à utiliser du borohydrure de sodium ou du borohydrure de potassium activé par un broyage.

7. Procédé suivant l'une des revendications 1 à 5, caractérisé en ce qu'il consiste, quand on utilise du borohydrure de sodium ou du borohydrure de potassium dans des étheroxydes de dialcoyle simples, à effectuer la réaction tout en effectuant un broyage d'activation.